(19) Europäisches Patentamt
European Patent Office
Office européen des brevets

(11) **EP 4 660 891 A1**

(12) **EUROPEAN PATENT APPLICATION**

(43) Date of publication:
**10.12.2025 Bulletin 2025/50**

(21) Application number: **24207748.5**

(22) Date of filing: **21.10.2024**

(51) International Patent Classification (IPC):
**G06N 3/0985** $^{(2023.01)}$    **G06N 3/0464** $^{(2023.01)}$
**G06N 3/0499** $^{(2023.01)}$    **G06N 3/084** $^{(2023.01)}$
**G06N 3/09** $^{(2023.01)}$

(52) Cooperative Patent Classification (CPC):
**G06N 3/0985; G06N 3/0464; G06N 3/0499;**
**G06N 3/084; G06N 3/09**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **04.06.2024 TW 113120631**

(71) Applicant: **Wistron Corporation**
**New Taipei City 22181 (TW)**

(72) Inventor: **Chian, Guan-Yi**
 **New Taipei City 22181 (TW)**

(74) Representative: **Straus, Alexander et al**
**2K Patentanwälte - München**
**Bajuwarenring 14**
**82041 Oberhaching (DE)**

Remarks:
Amended claims in accordance with Rule 137(2)
EPC.

(54)    **COMPUTING METHOD AND COMPUTING DEVICE THEREOF**

(57)    A computing method for a computing device includes converting input data into augmentation data according to a hyperparameter combination, and inputting the augmentation data into a primary network. A hypernetwork is configured to use a plurality of hypernetwork parameters to output a plurality of primary network parameters of the primary network according to the hyperparameter combination. The primary network is configured to use the primary network parameters to generate output data according to the augmentation data. The hypernetwork parameters are trained or being trained; the primary network parameters are untrained.

FIG. 8

**Description**

Field of the Invention

The present invention relates to a computing method and a computing device thereof, and more particularly, to a computing method and a computing device thereof that can improve model performance and reduce computation time.

Background of the Invention

In the development of deep learning models (e.g., an image deep learning model), various data augmentation methods can be employed to provide a larger amount of training data, enabling a deep learning model to train or learn using more diverse training data. However, selecting an inappropriate data augmentation method or an inappropriate combination of hyperparameters results in unnecessary computation time or resource wastage, and even degrades the performance of a deep learning model. The existing technology is to manually select data augmentation methods and their corresponding hyperparameter combinations, train deep learning models for the hyperparameter combinations one by one, and determine which deep learning model of a certain hyperparameter combination yields the best performance. However, this existing technology requires manual selection of hyperparameter combinations and the training of multiple deep learning models, which consumes significant manpower and computational resources. Therefore, selecting appropriate data augmentation methods and their corresponding hyperparameter combinations remains a major challenge in the development of existing deep learning models.

Summary of the Invention

It is therefore a primary objective of the present application to provide a computing method and a computing device thereof, to improve over disadvantages of the prior art.

The invention is set out in the appended claims.

An embodiment of the present invention discloses a computing method, for a computing device, comprising converting input data into augmentation data according to a hyperparameter combination; and inputting the augmentation data into a primary network; wherein a hypernetwork is configured to use a plurality of hypernetwork parameters to output a plurality of primary network parameters of the primary network according to the hyperparameter combination; wherein the primary network is configured to use the primary network parameters to output output data according to the augmentation data; wherein the hypernetwork parameters are trained or being trained; wherein the plurality of primary network parameters are untrained.

Another embodiment of the present invention discloses a computing device, comprising a processing circuit, configured to run a primary network and a hypernetwork, and a storage circuit, coupled to the processing circuit and configured to store an instruction. The processing circuit is configured to execute the instruction, wherein the instruction comprises converting input data into augmentation data according to a hyperparameter combination; and inputting the augmentation data into a primary network; wherein a hypernetwork is configured to use a plurality of hypernetwork parameters to output a plurality of primary network parameters of the primary network according to the hyperparameter combination; wherein the primary network is configured to use the primary network parameters to output output data according to the augmentation data; wherein the hypernetwork parameters are trained or being trained; wherein the plurality of primary network parameters are untrained.

Brief Description of the Drawings

FIG. 1 is a schematic diagram of a computing device according to an embodiment of the present invention.
FIG. 2 is a schematic diagram of a computing method according to an embodiment of the present invention.
FIG. 3 and FIG. 4 are schematic diagrams of computing devices according to embodiments of the present invention.
FIG. 5 and FIG. 6 are schematic diagrams of AUROCs for different hyperparameter combinations.
FIG. 7 is a schematic diagram of the computing architecture of an existing neural network architecture.
FIG. 8 is a schematic diagram of the computing architecture of a Hyper-Primary network architecture according to an embodiment of the present invention.
FIG. 9 is a schematic diagram of a computing device according to an embodiment of the present invention.
FIG. 10 is a schematic diagram of input data and augmentation data according to an embodiment of the present invention.

Detailed Description

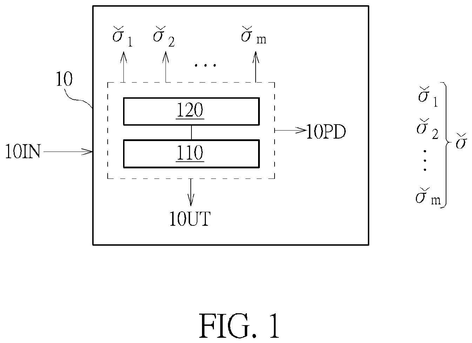

FIG. 1 is a schematic diagram of a computing device 10 according to an embodiment of the present invention. The computing device 10 (e.g., a chip, a computer, or a host) comprises a storage circuit 110 and a processing circuit 120. The computing device 10 may be deployed in an industrial production line, a drone, or a sensor, etc. The computing device 10 may automatically select at least one optimal hyperparameter $\breve{\sigma}_1$ to $\breve{\sigma}_m$ (e.g., a rotation angle or a contrast) from multiple hyperparameters (e.g., multiple rotation angles or multiple contrasts). The optimal hyperparameter(s) $\breve{\sigma}_1$-$\breve{\sigma}_m$ may constitute a combination $\breve{\sigma}$ of hyperparameters (referred to as a hyperparameter combination). After receiving input data 10IN (e.g., an input image), the computing device 10 may augment or convert the input data 10IN into augmentation data 10UT (e.g., an output image) according to the hyperparameter combination $\breve{\sigma}$, which is selected by the computing device 10. Furthermore, the computing device 10 may produce and send out output data 10PD (e.g., a class distinguished for a classification task, a segmented image cut out for a segmentation task, or a probability determined for a regression task) corresponding to the augmentation data 10UT.

For example, the computing device 10 may automatically select the rotation angle as 175° or the image brightness as 0.8, so that the hyperparameter combination $\breve{\sigma}$ comprises 175° and 0.8. Moreover, after the input data 10IN is rotated by 175° and the image brightness of the input data 10IN is adjusted to 0.8 to convert the input data 10IN into the augmentation data 10UT, the computing device 10 may automatically obtain the output data 10PD corresponding to the input data 10IN. Moreover, for a classification task (or a segmentation task), the output data 10PD is a class with higher accuracy (or a segmented image with higher accuracy). In other words, the computing device 10 may automatically and efficiently select an appropriate data augmentation method or an appropriate hyperparameter combination, and automatically and efficiently optimize the corresponding deep learning model in an inference phase, thereby saving manpower, computation time, or resources.

In one embodiment, a training dataset and a validation dataset may be used in a training phase. A test dataset may be used in a test phase. An inference dataset, which may be used in an inference phase, comprises unlabeled data.

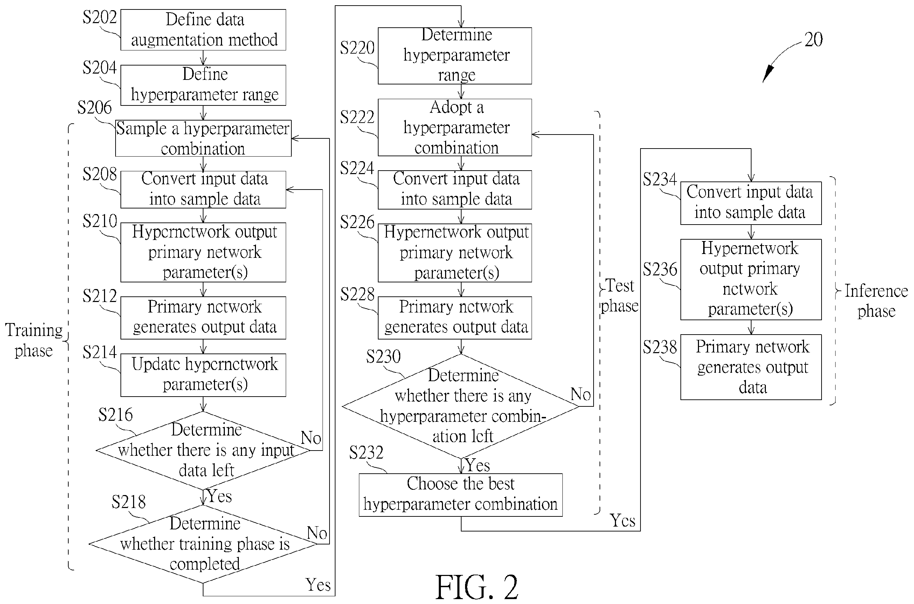

FIG. 2 is a schematic diagram of a computing method 20 according to an embodiment of the present invention. The computing method 20 may be used in a computing device (e.g., 10). At least part of the computing method 20 may be compiled into a program code. The computing method 20 may comprise the following steps:

Step S202: The computing device or user(s) define(s) a data augmentation method to be adopted. For example, a data augmentation method may comprise image flipping, image rotation, image shifting, image scaling, image brightness or contrast adjustment, or a combination thereof, but is not limited thereto.

Step S204: The computing device or user(s) define(s) the possible range(s) of hyperparameter(s) for each data augmentation method. For example, a hyperparameter range may be from 0 to 360 degrees for image rotation, and a hyperparameter used in the training phase is within the hyperparameter range and may be an integer or a floating point number between 0 and 360 degrees. For example, a hyperparameter range may be from 0 to 1 for image brightness adjustment, and a hyperparameter used in the training phase is within the hyperparameter range and may be a floating point number between 0 and 1 degree.

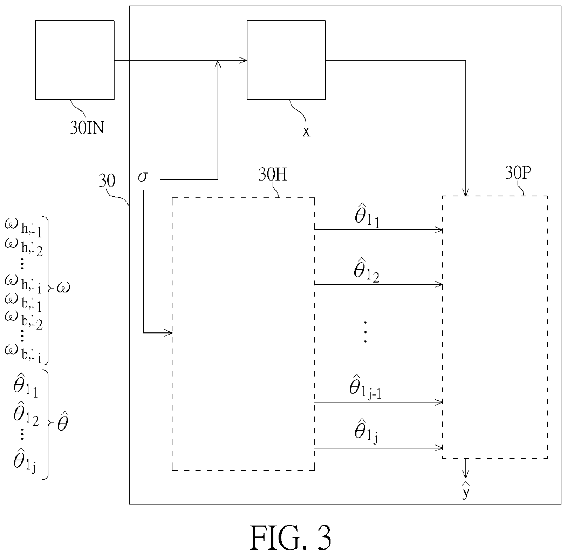

Step S206: The computing device samples a hyperparameter combination (e.g., $\sigma$ in FIG. 3). For example, through random sampling, a hyperparameter combination $\sigma$ is randomly sampled among the hyperparameter range(s) with a random distribution $p(\sigma)$, where $p(\sigma)$ may be arbitrary random distribution (e.g., a uniform distribution). In one embodiment, sampling a certain hyperparameter combination means deciding a certain data augmentation method.

Step S208: The computing device performs data augmentation based on the sampled hyperparameter combination. For example, the computing device applies the hyperparameter combination $\sigma$ (e.g., a rotation angle of 45° or image brightness of 0.5) to one or more input data of a training dataset, such that each input data (e.g., 30IN in FIG. 3) is converted into augmentation data (e.g., $x$ in FIG. 3) individually.

Step S210: The computing device generates primary network parameter(s) based on the sampled hyperparameter combination. For example, the computing device inputs the hyperparameter combination $\sigma$ into a hypernetwork. The hypernetwork, using hypernetwork parameter(s) (e.g., $\omega$ in FIG. 3), correspondingly outputs primary network parameter(s) for a primary network (e.g., $\hat{\theta}$ in FIG. 3) according to the hyperparameter combination $\sigma$. The hyperparameter combination $\sigma$ (e.g., the rotation angle of 45° or the image brightness of 0.5) may be expressed in vector form (e.g., [45, 0.5]).

Step S212: The computing device calculates the output data. For example, the computing device inputs the augmentation data, which is created from the conversion in step S208, to the primary network. The primary network uses the primary network parameter(s) to output, according to each augmentation data (e.g., $x$), its corresponding output data (e.g., $\hat{y}$ in FIG. 3).

Step S214: The computing device updates the hypernetwork parameter(s) (e.g., $\omega$). For example, the computing device calculates a loss function or model metric(s), and optimizes or adjusts the hypernetwork parameter(s) using backpropagation.

Step S216: The computing device determines whether one epoch is completed. For example, the computing device determines whether all the input data (e.g., 30IN) of the training dataset have been processed once. If the computing device determines that there is still input data that has not been computed, it proceeds with training using the remaining input data, for example, by re-executing step S208 or S206 to convert at least one of the remaining input data into at least one augmentation data. If the computing device determines that one epoch is completed, it executes, for example, step S218.

Step S218: The computing device determines whether the training phase is completed. For example, when the loss function converges or the model metric(s) meet the target(s), the computing device determines that the training phase is completed, and then executes step S220. If the training phase is not completed, the computing device performs, for example, step S206 again, and uses the same or different hyperparameter combinations for training.

Step S220: The computing device determines hyperparameter range(s) to be searched for each data augmentation method. The hyperparameter range(s) of step S220 may be the same as or different from (e.g., less than or equal to) the hyperparameter range(s) of step S204. For example, the upper limit of a hyperparameter range of step S220 is less than the upper limit of the hyperparameter range of step S204, and the lower limit of the hyperparameter range of step S220 is greater than the lower limit of the hyperparameter range in step S204. In one embodiment, in the training phase, a rotation angle defined in step S204 may be between 90 and 180 degrees. In the test phase or the inference phase, a rotation angle may be between 90 and 180 degrees. However, in another embodiment, the rotation angle may be set to 240 degrees in step S220, and the computing device is still able to perform calculations.

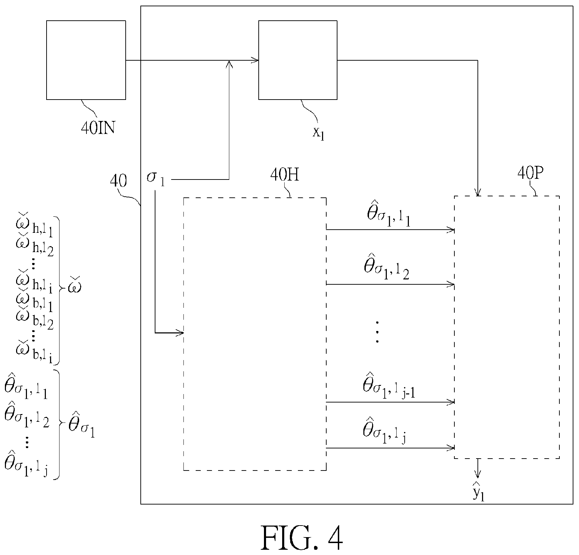

Step S222: The computing device selects a hyperparameter combination (e.g., $\sigma_1$ in FIG. 4). In one embodiment, selecting a certain hyperparameter combination means determining a certain data augmentation method. For example, the rotation angle of 0° means no image rotation. In one embodiment, the data augmentation method used in the training phase may be selected in Step S222, while a different hyperparameter combination from the one used in the training phase is chosen in Step S222. For example, image scaling is not used in the training phase, and it is not used in the test phase or the inference phase.

Step S224: The computing device performs data augmentation according to the selected hyperparameter combination. For example, the computing device applies the selected hyperparameter combination $\sigma_1$ (e.g., a rotation angle of 60° or image brightness of 0.8) to one or more input data of a test dataset, such that each input data (e.g.,40IN in FIG. 4) is converted into augmentation data (e.g., $x_1$ in FIG. 4).

Step S226: The computing device generates primary network parameter(s) according to the selected hyperparameter combination. For example, the computing device inputs the selected hyperparameter combination $\sigma_1$ to the hypernetwork. The hypernetwork uses the trained hypernetwork parameter(s) (e.g., $\breve{w}$ in FIG. 4) to correspondingly output the primary network parameter(s) (e.g., $\hat{\theta}_{\sigma_1}$ in FIG. 4) for the primary network according to the hyperparameter combination $\sigma_1$. The hyperparameter combination $\sigma_1$ (e.g., the rotation angle of 60° or the image brightness of 0.8) may be expressed in vector form (e.g., [60, 0.8]).

Step S228: The computing device calculates the output data. For example, the computing device inputs the augmentation data, which is created from the conversion in step S224, to the primary network. The primary network uses the primary network parameter(s) to output corresponding output data (e.g., $\hat{y}_1$ in FIG. 3) for each augmentation data (e.g., $x_1$ in FIG. 4). The computing device may also calculate corresponding model metric(s) for the output data.

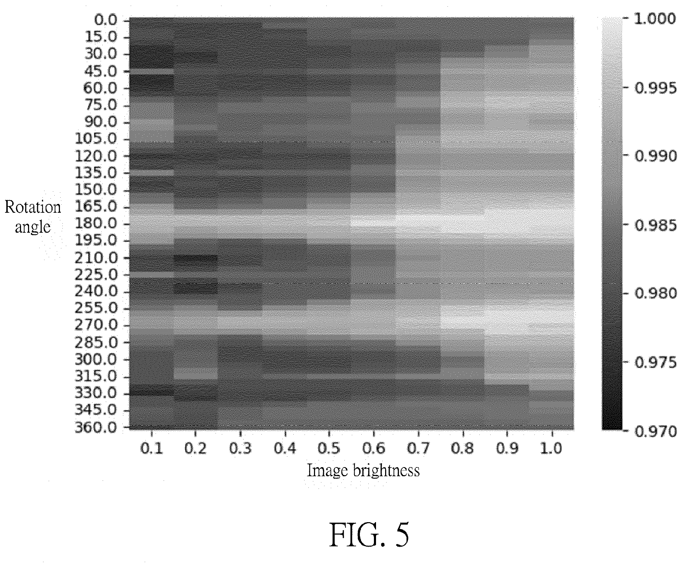

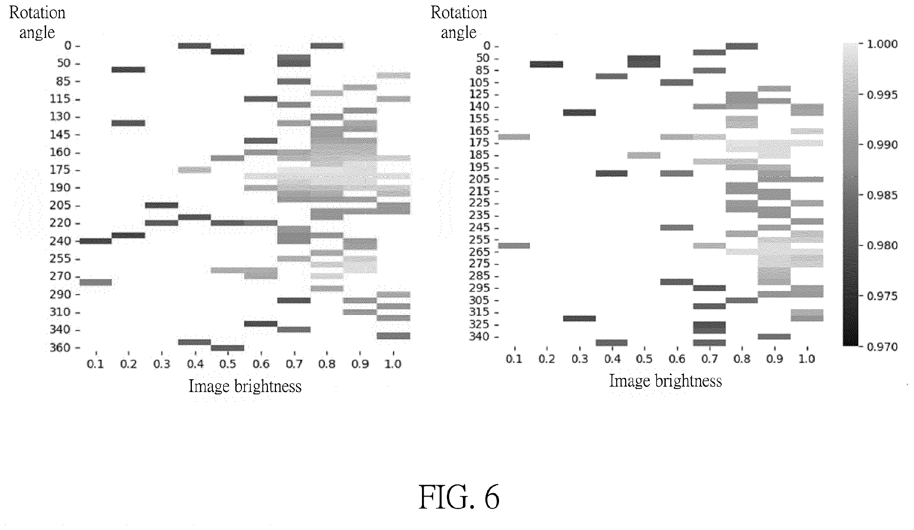

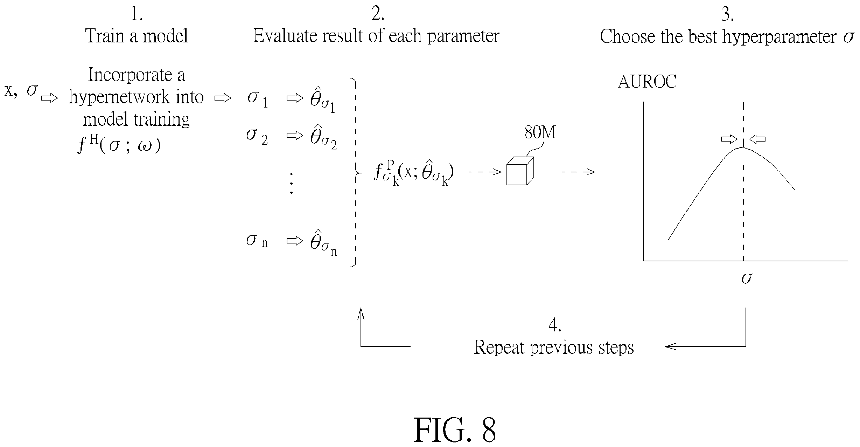

Step S230: The computing device determines whether further computation is needed for other hyperparameter combination(s). For example, the computing device determines whether all the hyperparameters within the hyperparameter range(s) of step S220 have been calculated once (e.g., FIG. 5). Alternatively, the computing device directly executes step S222 to select hyperparameter combination(s) to be calculated (e.g., FIG. 6). If the computing device determines that there is/are still hyperparameter combination(s) that need computation (e.g., $\sigma_2$ to $\sigma_n$ in FIG. 8), it re-executes, for example, step S222 or S224; otherwise, proceed to step S232.

Step S232: The computing device selects the best hyperparameter combination. For example, based on model metrics corresponding to the hyperparameter combinations, the computing device selects the best hyperparameter combination (e.g., $\sigma_2$ in FIG. 8) from all the hyperparameter combinations (e.g., $\sigma_1 \sim \sigma_n$ FIG. 8) having been calculated.

Step S234: The computing device performs data augmentation according to the best hyperparameter combination. For example, the computing device applies the best hyperparameter combination (e.g., $\breve{\sigma}$ in FIG. 1) to input data (e.g., 10IN in FIG. 1) of an inference dataset, to convert the input data into augmentation data (e.g., 10UT in FIG. 1).

Step S236: The computing device determines the primary network parameter(s) based on the best hyperparameter combination. For example, the computing device inputs the best hyperparameter combination $\breve{\sigma}$ into the hypernetwork. The hypernetwork uses the trained hypernetwork parameters (e.g., $\breve{w}$ in FIG. 4) to correspondingly output the primary network parameter(s) for the primary network according to the hyperparameter combination $\breve{\sigma}$. Alternatively, the computing device looks up a table to determine the primary network parameter(s). A hyperparameter combination may be expressed in vector form.

Step S238: The computing device calculates the output data. For example, the computing device inputs the augmentation data, which is created from the conversion in step S234, to the primary network. The primary network uses the primary network parameter(s) to output corresponding output data (e.g., 10PD in FIG. 1) for the augmentation data.

One or more of steps S202 to S238 may be omitted or reordered as needed. For example, in one embodiment, only at least one of S206 to S214 (e.g., step S208) may be performed to execute or implement the training phase. In one embodiment, an iteration of the training phase may comprise at least one of steps S206 to S214 (e.g., step S208 or S214). In one embodiment, an epoch of the training phase may comprise at least one of steps S206 to S214. In one embodiment, for the full batch, step S216 may be omitted. In one embodiment, the order of steps S208 and S210 may be swapped or paralleled. In one embodiment, only at least one of steps S222 to S232 (e.g., step S224) may be performed to execute or implement the test phase. In one embodiment, the order of steps S224 and S226 may be swapped or paralleled. In one embodiment, step S220 may be omitted. In one embodiment, only at least one of steps S234 to S238 (e.g., step S234) may be performed to execute or implement the inference phase. In one embodiment, the order of steps S234 and S236 may be swapped or paralleled.

FIG. 3 is a schematic diagram of a computing device 30 according to an embodiment of the present invention. The computing device 10, the input data 10IN, the augmentation data 10UT, the output data 10PD, and the hyperparameter combination $\breve{\sigma}$ may be respectively implemented by using a computing device 30, input data 30IN, augmentation data $x$, output data $\hat{y}$, and a hyperparameter combination $\sigma$, and vice versa. The computing device 30 may comprise a primary network 30P and a hypernetwork 30H. Primary network parameters $\hat{\theta}_{l_1}$ to $\hat{\theta}_{l_j}$ of the primary network 30P may constitute or be referred to as $\hat{\theta}$. Hypernetwork parameters $\omega_{h,l_1}$ to $\omega_{h,l_i}$ and $\omega_{b,l_1}$ to $\omega_{b,l_i}$ of the hypernetwork 30H may constitute or be referred to as $\omega$.

The primary network 30P comprises multiple layers. Each layer comprises multiple neurons. The output of any given layer is, for example, a linear combination or a function of its input and at least one primary network parameter (e.g., $\hat{\theta}_{l_1}$). In step S212, after the augmentation data $x$ is input to the primary network 30P, the primary network 30P generates the output data $\hat{y}$ according to the primary network parameter(s) $\hat{\theta}$. The primary network 30P may satisfies the model architecture $f_\sigma^P\left(x;\hat{\theta}\right)$, and $\hat{y}=f_\sigma^P\left(x;\hat{\theta}\right)=f_\sigma^P\left(x;f^H(\sigma;\omega)\right)$.

The hypernetwork 30H comprises multiple layers, each comprising multiple neurons. The output of any given layer is, for example, a linear combination or a function of its input and at least one hypernetwork parameter (e.g., a weight $\omega_{h,l_i}$ of a certain layer or a bias $\omega_{b,l_i}$ of a certain layer). For example, an output, its input, and hypernetwork parameters satisfy $z_i = \omega_{h,l_1}z_{i-1} + \omega_{b,i}$ or $z_i=\max(z_{i-1},0)$, where $l_i$ represents a certain layer of the hypernetwork 30H, $z_i$ represents the output of the layer, $z_{i-1}$ represents the input of the layer (e.g., the hyperparameter combination $\sigma$ serves as the input $z_0$ of the first layer), and $z_i$ or $z_{i-1}$ may be a scalar, a vector, or a matrix. However, the present invention is not limited thereto. The hypernetwork 30H may satisfy the model architecture $f^H(\sigma;\omega)$, and $\hat{\theta}=f^H(\sigma;\omega)$.

From step S214, the hypernetwork parameter(s) $\omega$ of the hypernetwork 30H is/are trainable. The training phase involves, for example, updating the hypernetwork parameter(s) $\omega$ to optimal hypernetwork parameter(s) $\breve{\omega}$ so as to minimize a loss function $\mathcal{L}(\hat{y},y)$. For simplicity, the overall loss function $\Sigma\mathcal{L}(\hat{y},y)$ is abbreviated as the loss function $\mathcal{L}(\hat{y},y)$, regardless of the amount of augmentation data being computed. Moreover, $y$ represents the ground truth of the labeled input data 30IN. The computing device 30 may compare the ground truth (e.g., $y$) with the output data (e.g., $\hat{y}$) to generate the loss function $\mathcal{L}(\hat{y}, y)$.

For example, the computing device 30 may directly calculate a closed-form solution $\breve{\omega}$ by setting the partial derivative of the loss function $\mathcal{L}(\hat{y},y)$ with respect to the hypernetwork parameter(s) $\omega$ to zero (e.g., $\frac{\partial\mathcal{L}(\hat{y},y)}{\partial\omega_{h,l_i}}=0$). Accordingly, the computing device 30 may directly find the optimal hypernetwork parameter(s) $\breve{\omega}$ and complete the training of the hypernetwork parameter(s) $\omega$ or the training of the hypernetwork 30H.

Alternatively, the computing device 30 may iteratively find or get closer to the optimal hypernetwork parameter(s) $\breve{w}$, for example, using a gradient descent method. Take the hypernetwork parameter $\omega_{h,l_i}$ as an example. In a certain iteration, in order to reduce the loss function $\mathcal{L}(\hat{y}, y)$, the updated hypernetwork parameter $\breve{\omega}_{h,l_i}$ may be equal to the original hypernetwork parameter $\omega_{h,l_i}$ minus $\eta \times \frac{\partial\mathcal{L}(\hat{y},y)}{\partial\omega_{h,l_i}}$ (i.e., satisfying $\breve{\omega}_{h,l_i} = \omega_{h,l_i} - \eta \times \frac{\partial\mathcal{L}(\hat{y},y)}{\partial\omega_{h,l_i}}$), where $\eta$ represents a learning rate. Accordingly, the primary network 30P may produce the output data $\hat{y}$ that is closer to the ground truth $y$ after this iteration. The computing device 30 may leverage backpropagation to compute the partial derivative $\frac{\partial\mathcal{L}(\hat{y},y)}{\partial\omega_{h,l_i}}$ of the loss function $\mathcal{L}(\hat{y},y)$ with respect to the hypernetwork parameter $\omega_{h,l_i}$. After multiple iterations (e.g.,

repeatedly executing step S216 or S218), the computing device 30 may optimize the hypernetwork parameter(s) $\omega$ to become the optimal hypernetwork parameter(s) $\breve{\omega}$, and hence complete the training of the hypernetwork parameter(s) $\omega$ or the training of the hypernetwork 30H.

From step S210, the primary network parameter(s) $\hat{\theta}$ of the primary network 30P is/are untrainable. In step S210, after the hyperparameter combination $\sigma$ is input to the hypernetwork 30H, the hypernetwork 30H outputs the primary network parameter(s) $\hat{\theta}$ according to the hypernetwork parameter(s) $\omega$. In one embodiment, hyperparameter combinations of any two iterations may be different or the same. In other words, a hyperparameter combination (referred to as a fifth hyperparameter combination) may be sampled in one iteration of step S206, and another hyperparameter combination (referred to as a sixth hyperparameter combination) may be sampled in another iteration of step S206. However, even if the same hyperparameter combination $\sigma$ is sampled in two iterations (e.g., the fifth hyperparameter combination is the same as the sixth hyperparameter combination), primary network parameters for the two iterations differ: Specifically, in step S210 of a certain iteration, the hypernetwork 30H outputs multiple primary network parameters (referred to as fifth primary network parameters, respectively). After the hypernetwork parameter(s) $\omega$ is/are updated in this iteration, the hypernetwork 30H outputs multiple primary network parameters (referred to as sixth primary network parameters respectively), which are different from the fifth primary network parameters, in step S210 of the next iteration. In other words, after each iteration, the hypernetwork parameter(s) $\omega$ change(s), and the primary network parameter(s) $\hat{\theta}$ output from the hypernetwork 30H also change(s).

In a word, the hypernetwork parameter(s) $\omega$ or the hypernetwork is/are trained in the training phase of this application. However, the primary network parameters $\hat{\theta}$ cannot be trained (e.g., the primary network parameters $\hat{\theta}$ have not been trained or will not be trained). Instead, the primary network parameters $\hat{\theta}$ are passively provided by the hypernetwork 30H to the primary network 30P. In other words, after the training phase ends, the hypernetwork parameter(s) $\omega$ do not change with the hyperparameter combination $\sigma$, while the primary network parameter(s) $\hat{\theta}$ change with the hyperparameter combination $\sigma$ based on the calculation of the hypernetwork 30H.

FIG. 4 is a schematic diagram of a computing device 40 according to an embodiment of the present invention. The computing device 10, the input data 10IN, the augmentation data 10UT, the output data 10PD, and the hyperparameter combination $\breve{\sigma}$ may be respectively implemented by using a computing device 40, input data 40IN, augmentation data $x_1$, output data $\hat{y}_1$, and a hyperparameter combination $\sigma_1$, and vice versa. The computing device 40 may comprise a primary network 40P and a hypernetwork 40H, which are structurally or functionally the same as or similar to the primary network 30P and the hypernetwork 30H, respectively. Primary network parameters $\hat{\theta}_{\sigma1,l1}$ to $\hat{\theta}_{\sigma1,lj}$ and hypernetwork parameters $\breve{\omega}_{h,l1}$ to $\breve{\omega}_{b,li}$ may constitute or be referred to as $\hat{\theta}_{\sigma1}$ and $\breve{\omega}$, respectively.

In another aspect, FIGs. 3 and 4 may be used to illustrate the training phase and the test phase (or the inference phase) of a computing device, respectively. For example, the hypernetwork parameter(s) $\omega$ is/are updated to the hypernetwork parameter(s) $\breve{\omega}$. Therefore, even if the hyperparameter combination $\sigma$ is the same as the hyperparameter combination $\sigma_1$, the primary network parameter(s) $\hat{\theta}$ may be different from the primary network parameter(s) $\hat{\theta}_{\sigma1}$.

In one embodiment, before the test phase, the hypernetwork parameter(s) $\omega$ has/have been updated to become the optimal hypernetwork parameter(s) $\breve{\omega}$. Taking step S226, the hypernetwork 40H, corresponding to different hyperparameter combinations (e.g., $\sigma_1$ or $\sigma_n$ in FIG. 8), outputs the primary network parameters of the primary network (e.g., $\hat{\theta}_{\sigma1}$ or $\hat{\theta}_{\sigma n}$ in FIG. 8). In step S228, the primary network 40P uses the primary network parameters to calculate the output data corresponding to the augmentation data. In step S232, the computing device 40 calculates the corresponding model metric(s) for each hyperparameter combination. After comparing all the obtained model metrics, the computing device 40 may choose the best model metric(s). Corresponding to the best model metric(s), the computing device 40 may select the best hyperparameter combination (e.g., $\breve{\sigma}$) from all the calculated hyperparameter combinations ($\sigma_1 \sim \sigma_n$).

In another perspective, a hyperparameter combination (e.g., $\breve{\sigma}$) may be regarded as the input to the hypernetwork 40H. Therefore, the multiple hyperparameters of the hyperparameter combination are neither updated nor trained. Instead, the best hyperparameter combination is selected from the multiple computed hyperparameter combinations.

In one embodiment, before the inference phase, the hypernetwork parameter(s) $\omega$ has/have been updated to the optimal hypernetwork parameter(s) $\breve{\omega}$, and the computing device 40 has decided the best hyperparameter combination. Therefore, the primary network parameters are determined. Accordingly, step S236 or the hypernetwork 40H may be removed. And the primary network 40P in step S238 may directly use the known primary network parameters to infer the output data corresponding to any augmentation data of step S234.

The method by which the computing device 40 selects a hyperparameter combination in step S222 may be adaptively adjusted. For example, FIGs. 5 and 6 are schematic diagrams of area under the receiver operating characteristic curves (AUROC) for different hyperparameter combinations according to embodiments of the present invention.

In one embodiment, a one-by-one search method may be used to find the best hyperparameter combination. For example, FIG. 5 presents the AUROC for each hyperparameter combination. In step S220, for image rotation, the computing device 40 may define the hyperparameter range to be from 0 to 360 degrees, and define a hyperparameter within the hyperparameter range as an integer between 0 and 360 degrees, with a common difference of 5 degrees between hyperparameters. For image brightness, the computing device 40 may define the hyperparameter range to be from 0 to 1, and define a hyperparameter within the hyperparameter range as a floating point number between 0 and 1, with a common difference of 0.1 between hyperparameters. In step S222, the computing device 40 may select one of 720 hyperparameter combinations (i.e., $(360 \div 5) \times (1 \div 0.1) = 720$) sequentially to perform step S224 or S226. After searching through these 720 hyperparameter combinations, the computing device 40 may calculate the corresponding model metrics (e.g., AUROCs) in step S228. As shown in FIG. 5, the AUROC for a rotation angle of 175° and image brightness of 0.8 is closest to 1; therefore, the hyperparameter combination of 175° and 0.8 may be selected as the best hyperparameter combination (e.g., $\breve{\sigma}$) in step S232. The computing device 40 may use the rotation angle of 175° and the image brightness of 0.8 as hyperparameters for subsequent data augmentation (e.g., step S234) to improve inference accuracy.

In one embodiment, in order to reduce the number of hyperparameter combinations to be searched, an optimization algorithm (e.g., Bayesian optimization or tree-structured Tarzen estimator algorithm) may be used to find the best hyperparameter combination. For example, in step S222, the computing device 40 may randomly select several hyperparameter combinations (referred to as first hyperparameter combinations, respectively) to calculate their corresponding model metrics in step S228. Accordingly, the computing device 40 can find hyperparameter combinations (e.g., $\sigma_2$, $\sigma_n$ in FIG. 8) corresponding to better model metrics from the first hyperparameter combinations. Then, returning to step S222, the computing device 40 selects hyperparameter combinations (e.g., $\sigma_3$, $\sigma_{n-1}$ in FIG. 8) (referred to as second hyperparameter combinations, respectively) that are close to (or far away from) the better hyperparameter combinations (e.g., $\sigma_2$, $\sigma_n$), respectively. Accordingly, the computing device 40 may calculate model metrics corresponding to the second hyperparameter combinations in step S228, and find the hyperparameter combination(s) (e.g., $\sigma_3$) corresponding to better model metric(s) from the second hyperparameter combinations. The computing device 40 may then iteratively return to step S222 to select hyperparameter combination(s) (e.g., $\sigma_4$ in FIG. 8) that is/are close to the hyperparameter combination(s) (e.g., $\sigma_3$) selected in the previous iteration and calculate the corresponding model metric(s). In this way, after searching through a certain number of hyperparameter combinations, the computing device 40 may find the best hyperparameter combination (e.g., $\breve{\sigma}$ in FIG. 1) from the searched hyperparameter combinations (e.g., $\sigma_2 \sim \sigma_4$, $\sigma_{n-1} \sim \sigma_n$).

For example, FIG. 6(a) shows AUROCs corresponding to 200 hyperparameter combinations. The computing device 40 may set the maximum number of hyperparameter combinations to be searched up to 200 and stop searching after a certain period of time. Similarly, FIG. 6(b) shows AUROCs corresponding to 100 hyperparameter combinations. FIG. 6 (a) or (b) indicates that the AUROC for a rotation angle of 175° and image brightness of 0.8 is closest to 1, and hence the hyperparameter combination of 175° and 0.8 may be selected as the best hyperparameter combination (e.g., $\breve{\sigma}$) in step S232. However, compared with FIG. 5 and FIG. 6 (a), FIG. 6 (b) only uses 100 hyperparameter combinations, which saves computation time or resources.

In one embodiment, the computing device selects the best hyperparameter combination based on the type of input data (e.g., an input image). For example, if input images for the inference phase are about screws, input images for the training phase are also about screws, and the best hyperparameter combination is also selected for screws. For example, if input images for the inference phase are about defects of embedded wires, the best hyperparameter combination is also selected for defect(s) of an embedded wire. In one embodiment, the best hyperparameter combination selected may be related to the type of input data (e.g., an input image) but is independent of the size or the ratio of the input data.

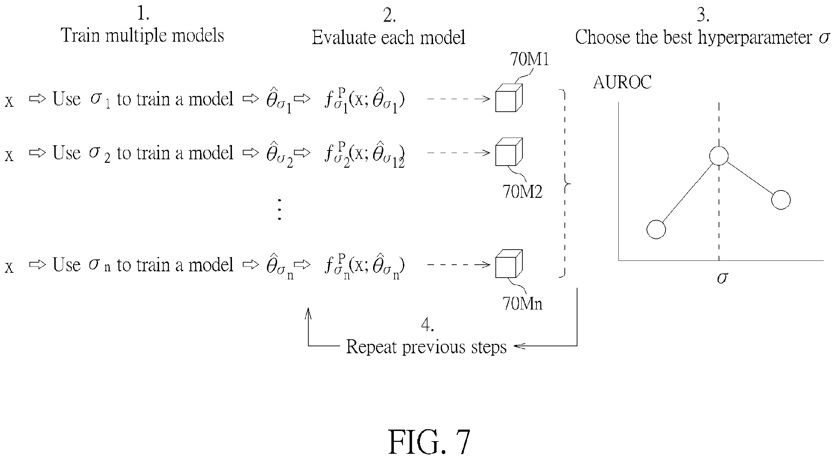

Table 1 lists differences between an existing neural network architecture and the Hyper-Primary network architecture proposed by the present invention. FIG. 7 is a schematic diagram of the computing architecture of an existing neural network architecture. FIG. 8 is a schematic diagram of the computing architecture of a Hyper-Primary network architecture according to an embodiment of the present invention.

(Table 1)

|  | Existing neural network architecture | Hyper-Primary network architecture |
|---|---|---|
| Training weights | Primary network | Hypernetwork |
| Source of primary network weights | Active training | Passively provided |
| Search space of hyperparameters | Discrete | Continuous |
| The number of hyperparameter combinations to be searched | N | N |
| The number of training models required | N | 1 |
| The number of inference models required | N | N |
| How to infer untrained hyperparameters | Re-training the model | Directly inferring |

In the existing neural network architecture, multiple deep learning models 70M1 to 70Mn need to be trained individually for different hyperparameter combinations $\sigma_1 \sim \sigma_n$. Moreover, the existing neural network architecture adopts grid search. As there are diverse and numerous data augmentation methods and their corresponding hyperparameter combinations, adding each new data augmentation method may exponentially double the number of deep learning models 70M1 to 70Mn that need to be trained. Therefore, the existing neural network architecture or the existing hyperparameter search method is not ideal.

In the Hyper-Primary network architecture of the present invention, a Hyper-Primary network comprises a primary network (e.g., 30P or 40P) and a hypernetwork (e.g., 30H or 40H). Regardless of the number of data augmentation methods or the number of hyperparameter combinations, only one deep learning model 80M (e.g., a hypernetwork) needs to be trained. After completing the training of the deep learning model 80M, different hyperparameter combinations $\sigma_1 \sim \sigma_n$ may be inputted to the trained deep learning model 80M. And the hypernetwork may provide optimal primary network parameters $\hat{\theta}_{\sigma_1} \sim \hat{\theta}_{\sigma_n}$ corresponding to different hyperparameter combinations $\sigma_1 \sim \sigma_n$, respectively, to construct different primary networks in the test phase. Accordingly, when dynamically adjusting to different hyperparameter combinations $\sigma_1 \sim \sigma_n$, the present invention ensures that the primary network parameters $\hat{\theta}_{\sigma_1} \sim \hat{\theta}_{\sigma_n}$ provided to the primary network are optimal, enhancing the model performance of the primary network. In other words, after the training of the deep learning model 80M is completed, it is possible to quickly search through different hyperparameter combinations $\sigma_1 \sim \sigma_n$ and the present invention ensures that the corresponding primary network also has optimal model performance.

In one embodiment, according to Table 1 or FIG. 8, hyperparameter combination(s) used in the test phase (e.g., step S222) or the inference phase (e.g., step S234 or S236) have been or have not been sampled in the training phase (step S206). In other words, hyperparameter combination(s) used in the test phase (referred to as fourth hyperparameter combination(s), respectively) may be different from hyperparameter combinations used to train the hypernetwork (referred to as third hyperparameter combinations, respectively). However, the present invention does not require retraining in terms of the fourth hyperparameter combinations. Instead, the present invention generates primary network parameters of the primary network corresponding to the fourth hyperparameter combination, allowing for direct inference on the input data.

In one embodiment, according to Table 1 or FIG. 8, the continuity of hyperparameter combinations used in the test phase (e.g., step S222) or the inference phase (e.g., step S234 or S236) may be higher than the continuity of hyperparameter combinations sampled in the training phase (step S206). In other words, the difference between hyperparameters of any two fourth hyperparameter combinations (e.g., the difference between 174.99° and 175°) may be smaller than the difference between hyperparameters of any two third hyperparameter combinations (e.g., the difference between 170° and 175°). In other words, the search space of hyperparameters in the test phase of the existing neural network architecture is discrete. In contrast, the search space of hyperparameters in the test phase of the present invention may be continuous.

Accordingly, the present invention can quickly and automatically generate a variety of augmentation data (e.g., automatic optical detection images), shorten the training time of the deep learning model 80M, and use optimization algorithm(s) to further shorten the time to search for the best data augmentation method or the best hyperparameter combination. Moreover, compared with the existing neural network architecture, the model performance of the present invention is better.

The present invention incorporates a hypernetwork and uses the hypernetwork to provide optimal primary network parameters to the primary network. Therefore, the primary network of the present invention may be applied to different model architectures or different image tasks. From another aspect, when using data of different types, the primary network may be modified and replaced with a different primary network for the corresponding data type. For example, the primary network may use an image classification model (e.g., Residual Neural Network (ResNet), Densely Connected Convolutional Network (DesNet), MobileNet, EfficientNet, etc.), an image segmentation model (e.g., Unet, Pyramid Scene Parsing Network (PSPNet), Feature Pyramid Network (FPN), LinkNet, etc.) or an object detection model (e.g., You Only Look Once (YOLO) algorithm, Single Shot Detector (SSD), Region-based Convolutional Neural Network (R-CNN), Mask R-CNN, etc.), but is not limited thereto.

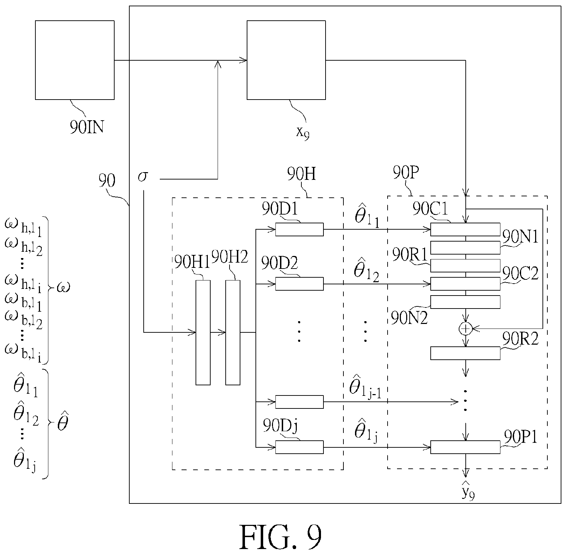

In one embodiment, the primary network may be a CNN-based deep learning network. The primary network and a hypernetwork may be combined into a deep learning network architecture of a Hyper-Primary network. For example, FIG. 9 is a schematic diagram of a computing device 90 according to an embodiment of the present invention. The computing device 10, the input data 10IN, the augmentation data 10UT, the output data 10PD, and the hyperparameter combination $\check{\sigma}$ may be respectively implemented by using a computing device 90, input data 90IN, augmentation data $x_9$, output data $\hat{y}_9$, and a hyperparameter combination $\sigma$, and vice versa. The computing device 90 may comprise a primary network 90P and a hypernetwork 90H. The primary network 30P (or 40P) and the hypernetwork 30H (or 40H) may be respectively implemented by using the primary network 90P and the hypernetwork 90H, and vice versa.

The primary network 90P comprises multiple layers (e.g., 90C1, 90C2, 90N1, 90N2, 90R1, 90R2, 90P1). The layers 90C1 and 90C2 may be convolutional layers. The layers 90N1 and 90N2 may be batch normalization layers. The layers 90R1 and 90R2 may be rectified linear unit (ReLU) layers. The layer 90P1 may be dense ReLU layers. The present invention does not limited thereto.

The hypernetwork 90H comprises multiple layers (e.g., 90H1, 90H2, 90D1 to 90Dj). The layers 90H1 and 90H2 may be dense ReLU layers, and the layers 90D1 to 90Dj may be dense layers. Alternatively, the layer 90H1 or 90H2 may satisfy $z_i = \omega_{h,li} z_{i-1} + \omega_{b,li}$, $z_i = \max(z_{i-1}, 0)$, or $z_i = \max(\omega_{h,li} z_{i-1} + \omega_{b,li}, 0)$. The present invention does not limited thereto. The hypernetwork 90H may be a multi-layer perceptron (MLP).

In one embodiment, any of the hypernetwork parameter (e.g., $\omega_{h,l1} \sim \omega_{b,li}$ or $\breve{\omega}_{h,l1} \sim \breve{\omega}_{b,li}$) or the primary network parameters (e.g., $\theta_{l1} \sim \theta_{lj}$ or $\theta_{\sigma1,l1} \sim \theta_{\sigma1,lj}$) may be a scalar, a vector, or a matrix. For example, the last layer of the hypernetwork 90H is used to output the primary network parameters $\hat{\theta}$ to the primary network 90P. Therefore, the number of values output by the hypernetwork 90H depends on the number of the primary network parameters $\hat{\theta}$ required by the primary network 90P. For example, the layer 90C1 may be a $3\times3$ convolutional layer, and the primary network parameters $\hat{\theta}_{l1}$ of the layer

$$\hat{\theta}_{l_1} = \begin{bmatrix} a_{11} & a_{12} & a_{13} \\ a_{21} & a_{22} & a_{23} \\ a_{31} & a_{32} & a_{33} \end{bmatrix}_{3\times3}$$

90C1 may be expressed as . The layer 90D1 may correspondingly output 9 values to

$$\begin{bmatrix} 0.5 & 0.3 & 0.1 \\ 0.3 & 0.8 & 0.9 \\ 0.7 & 0.2 & 0.2 \end{bmatrix}_{3\times3}$$

the layer 90C1, for example, , but is not limited thereto.

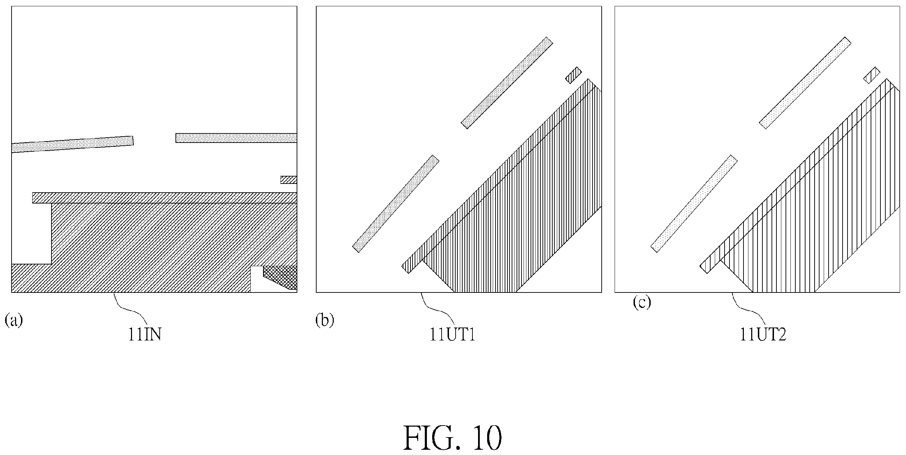

In one embodiment, the input data (e.g., 10IN) or the augmentation data (e.g., 10UT) of the present invention may be in various data types. In one embodiment, the input data or the augmentation data of the present invention is image data. For example, FIG. 10 is a schematic diagram of input data 11IN and augmentation data 11UT1, 11UT2 according to an embodiment of the present invention. The augmentation data 11UT1 is implemented by using the input data 11IN rotated by 45°. The augmentation data 11UT2 is implemented by using the input data 11IN rotated by 45° with the image brightness adjusted to 0.5. However, the present invention is not limited thereto. The input data or the augmentation data may also be numerical data (e.g., movement average, time adjustment, Bootstrap, etc.), text data (e.g., word replacement, word insertion, word deletion, etc.), audio or video data (e.g., video speed adjustment, segment shifting, pitch adjustment, etc.) or signal data (e.g., signal mixing, signal amplification/reduction, sampling frequency, etc.).

Since the training of a deep learning model requires data augmentation method(s) to reduce overfitting, the computing method of the present invention may be adopted in arbitrary technical fields. In one embodiment, the present invention may belong to computer vision technology and be applied in various fields (e.g., medical image processing, general daily imaging, Advanced driver-assistance systems (ADAS), automated inspection, etc.). However, the present invention is not limited thereto and may be applied to other fields as well.

In one embodiment, a model metric may be an AUROC or accuracy, but is not limited thereto. In one embodiment, an optimization method may be backpropagation or Adam Optimizer, but is not limited thereto. In one embodiment, a loss function may be calculated using binary cross entropy, but is not limited thereto. In one embodiment, the test dataset may comprise one or more training data of the training dataset; alternatively, the intersection of the test dataset and the training dataset is an empty set. In one embodiment, i, j, k, m, or n is a positive integer. In one embodiment, certain data augmentation method(s) may not be used: For example, if image rotation is not used, the rotation angle is set to 0°. If image brightness adjustment is not used, the image brightness is set to 1. If image mirroring is not used, the image mirroring is set to an identity matrix. Details or modifications of a data augmentation method are disclosed in Taiwan Patent Application No. 113116850, the disclosure of which is hereby incorporated by reference herein in its entirety and made a part of this specification. The technical features described in the aforementioned embodiments may be mixed or combined in various ways as long as there are no conflicts between them.

To sum up, the present invention may quickly and efficiently verify or test the model performance under different data augmentation methods and different hyperparameter combinations by training only one single deep learning model. Moreover, the present invention introduces optimization algorithm(s) to further shorten the time of searching for the best data augmentation method and the best hyperparameter combination. Furthermore, the present invention builds an automated machine learning (AutoML) system, allowing users without knowledge in the field of machine learning to apply different data augmentation methods and automatically generate various augmentation images in batches.

**Claims**

1. A computing method (20), for a computing device, **characterised by,** comprising:

converting input data (10IN, 30IN, or 11IN) into augmentation data (10UT, $x$, $x_1$, $x_9$, 11UT1, or 11UT2) according to a hyperparameter combination ($\breve{\sigma}$, $\sigma_1 \sim \sigma_n$, or $\sigma$); and

inputting the augmentation data into a primary network (30P, 40P, or 90P);

wherein a hypernetwork (30H, 40H, or 90H) is configured to use a plurality of hypernetwork parameters ($\omega_{h,l_1}{\sim}\omega_{b,l_i}$, $\omega$, $\hat{\omega}_{h,l_1}{\sim}\hat{\omega}_{b,l_i}$ or $\hat{\omega}$) to output a plurality of primary network parameters ($\hat{\theta}_{l_1}{\sim}\hat{\theta}_{l_i}$, $\hat{\theta}_{\sigma_1,l_1}{\sim}\hat{\theta}_{\sigma_1,l_i}$, $\hat{\theta}_{\sigma_1}{\sim}\hat{\theta}_{\sigma_n}$, or $\hat{\theta}$) of the primary network according to the hyperparameter combination;

wherein the primary network is configured to use the primary network parameters to output output data (10PD, $\hat{y}$, $\hat{y}_1$, or $\hat{y}_9$) according to the augmentation data;

wherein the hypernetwork parameters are trained or being trained;

wherein the plurality of primary network parameters are untrained.

2. The computing method of claim 1, **characterised in that,** in a training phase, at least one hyperparameter ($\breve{\sigma}_1$, $\breve{\sigma}_2$, ... or $\breve{\sigma}_m$) of the hyperparameter combination is randomly sampled from a plurality of hyperparameters so as to convert the input data labeled into the augmentation data according to the hyperparameter combination.

3. The computing method of claim 1 or 2, **characterised in that,** the plurality of hypernetwork parameters are optimized in a training phase.

4. The computing method of any of claims 1-3, **characterised in that,** a test phase is after a training phase, wherein in the test phase, the input data labeled is converted into a plurality of augmentation data according to a plurality of hyperparameter combinations, wherein a best hyperparameter combination is selected from the plurality of hyperparameter combinations based on a plurality of model metrics corresponding to the plurality of hyperparameter combinations.

5. The computing method of any of claims 1-4, **characterised in that,** the plurality of hyperparameter combinations comprise a plurality of first hyperparameter combinations and at least one second hyperparameter combination, wherein in a test phase, the at least one second hyperparameter combination is selected from the plurality of hyperparameter combinations according to a plurality of first model metrics corresponding to the plurality of first hyperparameter combinations, and a best hyperparameter combination is selected from the plurality of hyperparameter combinations at least according to the plurality of first model metrics and at least one second model metric corresponding to the at least one second hyperparameter combination.

6. The computing method of any of claims 1-5, **characterised in that,** an inference phase is after a training phase or a test phase, wherein in the inference phase, the input data unlabeled is converted into the augmentation data based on a best hyperparameter combination having been selected, and the plurality of primary network parameters are generated by the hyper network based on the best hyperparameter combination having been selected and according to the plurality of hypernetwork parameters having been trained.

7. The computing method of any of claims 1-6, **characterised in that,** after a training phase ends, the plurality of hypernetwork parameters do not change with any hyperparameter combination.

8. The computing method of any of claims 1-7, **characterised in that,** in a training phase, the hypernetwork is trained using at least one third hyperparameter combination, wherein in a test phase, the hypernetwork uses the plurality of hypernetwork parameters having been trained to output a plurality of fourth primary network parameters of the primary network corresponding to a plurality of fourth hyperparameter combinations, such that a best hyperparameter combination is selected from the plurality of fourth hyperparameter combinations, wherein at least one of the plurality of fourth hyperparameter combinations is different from at least one of the at least one third hyperparameter combination.

9. The computing method of any of claims 1-8, **characterised in that,** in a training phase, the hypernetwork is trained using at least one third hyperparameter combination, wherein in a test phase, the hypernetwork uses the plurality of hypernetwork parameters having been trained to output a plurality of fourth primary network parameters of the primary network corresponding to a plurality of fourth hyperparameter combinations, such that a best hyperparameter combination is selected from the plurality of fourth hyperparameter combinations, wherein an upper limit of the plurality of fourth hyperparameter combinations is less than or equal to an upper limit of the at least one third hyperparameter combination, wherein a lower limit of the plurality of fourth hyperparameter combinations is greater than or equal to a lower limit of the at least one third hyperparameter combination.

10. The computing method of any of claims 1-9, **characterised in that,** in a training phase, the hypernetwork is trained using a plurality of third hyperparameter combinations, wherein in a test phase, the hypernetwork uses the plurality of hypernetwork parameters having been trained to output a plurality of fourth primary network parameters of the primary network corresponding to a plurality of fourth hyperparameter combinations, such that a best hyperparameter combination is selected from the plurality of fourth hyperparameter combinations, wherein a difference between any two of the plurality of fourth hyperparameter combinations is less than a difference between any two of the third hyperparameter combinations.

11. The computing method of any of claims 1-10, **characterised in that,** the hyperparameter combination comprises at least one hyperparameter, and one of the at least one hyperparameter is a rotation angle, a contrast, image brightness, an image scale, or an image shift amount.

12. The computing method of any of claims 1-11, **characterised in that,** one hyperparameter of the hyperparameter combination is an integer or a floating point number.

13. The computing method of any of claims 1-12, **characterised in that,** the output data comprises a class distinguished for a classification task, a segmented image cut out for a segmentation task, or a probability determined for a regression task.

14. A computing device (10, 30, 40), **characterised by,** comprising:

a processing circuit (120), configured to run a primary network and a hypernetwork, wherein the processing circuit is configured to execute an instruction of the computing method of any of claims 1-13; and
a storage circuit (110), coupled to the processing circuit and configured to store the instruction.

15. The computing device of claim 14, **characterised in that,** the computing device automatically selects the hyperparameter combination, and automatically obtain the output data and the augmentation data corresponding to the input data.

**Amended claims in accordance with Rule 137(2) EPC.**

1. A computing method (20), for a computing device, **characterised by,** comprising:

converting input data (IOIN, 30IN, or 11IN) into augmentation data (IOUT, $x$, $x_1$, $x_9$, 11UT1, or 11UT2) according to a hyperparameter combination ($\breve{\sigma}$, $\sigma_1 \sim \sigma_n$, or $\sigma$); and inputting the augmentation data into a primary network (30P, 40P, or 90P);
wherein a hypernetwork (30H, 40H, or 90H) is configured to use a plurality of hypernetwork parameters ($\omega_{h,l_1} \sim \omega_{b,l_i}$, $\omega$, $\breve{\omega}_{h,l_1} \sim \breve{\omega}_{b,l_i}$ or $\breve{\omega}$) to output a plurality of primary network parameters ($\hat{\theta}_{l_1} \sim \hat{\theta}_{l_j}$, $\hat{\theta}_{\sigma 1,l_1} \sim \hat{\theta}_{\sigma 1,l_j}$, $\hat{\theta}_{\sigma 1} \sim \breve{\theta}_{\sigma n}$, or $\hat{\theta}$) of the primary network according to the hyperparameter combination;
wherein the primary network is configured to use the primary network parameters to output output data (10PD, $\hat{y}$, $\hat{y}_1$, or $\hat{y}_9$) according to the augmentation data;
wherein the plurality of hypernetwork parameters are trained or being trained;
wherein the plurality of primary network parameters are untrained;
wherein how the plurality of hypernetwork parameters are trained is distinct from how a best hyperparameter combination is selected from a plurality of hyperparameter combinations;
wherein the plurality of hyperparameter combinations comprise the hyperparameter combination.

2. The computing method of claim 1, **characterised in that,** in a training phase, at least one hyperparameter ($\breve{\sigma}_1$, $\breve{\sigma}_2$, ... or $\breve{\sigma}_m$) of the hyperparameter combination is randomly sampled from a plurality of hyperparameters so as to convert the input data labeled into the augmentation data according to the hyperparameter combination.

3. The computing method of claim 1 or 2, **characterised in that,** the plurality of hypernetwork parameters are optimized in a training phase.

4. The computing method of any of claims 1-3, **characterised in that,** a test phase is after a training phase, wherein in the test phase, the input data labeled is converted into a plurality of augmentation data according to the plurality of hyperparameter combinations, wherein the best hyperparameter combination is selected from the plurality of hyperparameter combinations based on a plurality of model metrics corresponding to the plurality of hyperparameter combinations.

5. The computing method of any of claims 1-4, **characterised in that,** the plurality of hyperparameter combinations comprise a plurality of first hyperparameter combinations and at least one second hyperparameter combination, wherein in a test phase, the at least one second hyperparameter combination is selected from the plurality of hyperparameter combinations according to a plurality of first model metrics corresponding to the plurality of first hyperparameter combinations, and the best hyperparameter combination is selected from the plurality of hyperparameter combinations at least according to the plurality of first model metrics and at least one second model metric corresponding to the at least one second hyperparameter combination.

6. The computing method of any of claims 1-5, **characterised in that,** an inference phase is after a training phase or a test phase, wherein in the inference phase, the input data unlabeled is converted into the augmentation data based on the best hyperparameter combination having been selected, and the plurality of primary network parameters are generated by the hyper network based on the best hyperparameter combination having been selected and according to the plurality of hypernetwork parameters having been trained.

7. The computing method of any of claims 1-6, **characterised in that,** after a training phase ends, the plurality of hypernetwork parameters do not change with any hyperparameter combination.

8. The computing method of any of claims 1-7, **characterised in that,** in a training phase, the hypernetwork is trained using at least one third hyperparameter combination, wherein in a test phase, the hypernetwork uses the plurality of hypernetwork parameters having been trained to output a plurality of fourth primary network parameters of the primary network corresponding to a plurality of fourth hyperparameter combinations, such that the best hyperparameter combination is selected from the plurality of fourth hyperparameter combinations, wherein at least one of the plurality of fourth hyperparameter combinations is different from at least one of the at least one third hyperparameter combination.

9. The computing method of any of claims 1-8, **characterised in that,** in a training phase, the hypernetwork is trained using at least one third hyperparameter combination, wherein in a test phase, the hypernetwork uses the plurality of hypernetwork parameters having been trained to output a plurality of fourth primary network parameters of the primary network corresponding to a plurality of fourth hyperparameter combinations, such that the best hyperparameter combination is selected from the plurality of fourth hyperparameter combinations, wherein an upper limit of the plurality of fourth hyperparameter combinations is less than or equal to an upper limit of the at least one third hyperparameter combination, wherein a lower limit of the plurality of fourth hyperparameter combinations is greater than or equal to a lower limit of the at least one third hyperparameter combination.

10. The computing method of any of claims 1-9, **characterised in that,** in a training phase, the hypernetwork is trained using a plurality of third hyperparameter combinations, wherein in a test phase, the hypernetwork uses the plurality of hypernetwork parameters having been trained to output a plurality of fourth primary network parameters of the primary network corresponding to a plurality of fourth hyperparameter combinations, such that the best hyperparameter combination is selected from the plurality of fourth hyperparameter combinations, wherein a difference between any two of the plurality of fourth hyperparameter combinations is less than a difference between any two of the third hyperparameter combinations.

11. The computing method of any of claims 1-10, **characterised in that,** the hyperparameter combination comprises at least one hyperparameter, and one of the at least one hyperparameter is a rotation angle, a contrast, image brightness, an image scale, or an image shift amount.

12. The computing method of any of claims 1-11, **characterised in that,** one hyperparameter of the hyperparameter combination is an integer or a floating point number.

13. The computing method of any of claims 1-12, **characterised in that,** the output data comprises a class distinguished for a classification task, a segmented image cut out for a segmentation task, or a probability determined for a regression task.

14. A computing device (10, 30, 40), **characterised by,** comprising:

   a processing circuit (120), configured to run a primary network and a hypernetwork, wherein the processing circuit is configured to execute an instruction of the computing method of any of claims 1-13; and
   a storage circuit (110), coupled to the processing circuit and configured to store the instruction.

**15.** The computing device of claim 14, **characterised in that,** the computing device automatically selects the hyperparameter combination, and automatically obtain the output data and the augmentation data corresponding to the input data.

FIG. 1

**Training phase**

S202 — Define data augmentation method

S204 — Define hyperparameter range

S206 — Sample a hyperparameter combination

S208 — Convert input data into sample data

S210 — Hypernetwork output primary network parameter(s)

S212 — Primary network generates output data

S214 — Update hypernetwork parameter(s)

S216 — Determine whether there is any input data left — No / Yes

S218 — Determine whether training phase is completed — No / Yes

**Test phase**

S220 — Determine hyperparameter range

S222 — Adopt a hyperparameter combination

S224 — Convert input data into sample data

S226 — Hypernetwork output primary network parameter(s)

S228 — Primary network generates output data

S230 — Determine whether there is any hyperparameter combination left — No / Yes

S232 — Choose the best hyperparameter combination — Yes

**Inference phase**

S234 — Convert input data into sample data

S236 — Hypernetwork output primary network parameter(s)

S238 — Primary network generates output data

20

FIG. 2

EP 4 660 891 A1

FIG. 3

EP 4 660 891 A1

40IN

$x_1$

$40$ $\sigma_1$

40H

40P

$\left.\begin{array}{c}\breve{\omega}_{h,l_1}\\ \breve{\omega}_{h,l_2}\\ \vdots\\ \breve{\omega}_{h,l_i}\\ \breve{\omega}_{b,l_1}\\ \breve{\omega}_{b,l_2}\\ \vdots\\ \breve{\omega}_{b,l_i}\end{array}\right\}\breve{\omega}$

$\left.\begin{array}{c}\hat{\theta}_{\sigma_1,l_1}\\ \hat{\theta}_{\sigma_1,l_2}\\ \vdots\\ \hat{\theta}_{\sigma_1,l_j}\end{array}\right\}\hat{\theta}_{\sigma_1}$

$\hat{\theta}_{\sigma_1,l_1}$

$\hat{\theta}_{\sigma_1,l_2}$

$\hat{\theta}_{\sigma_1,l_{j-1}}$

$\hat{\theta}_{\sigma_1,l_j}$

$\hat{y}_1$

FIG. 4

FIG. 5

FIG. 6

1.
Train multiple models

2.
Evaluate each model

70M1

3.
Choose the best hyperparameter $\sigma$

$x \Rightarrow$ Use $\sigma_1$ to train a model $\Rightarrow \hat{\theta}_{\sigma_1} \Rightarrow f_{\sigma_1}^P(x; \hat{\theta}_{\sigma_1})$ – – – – $\rightarrow$

AUROC

$x \Rightarrow$ Use $\sigma_2$ to train a model $\Rightarrow \hat{\theta}_{\sigma_2} \Rightarrow f_{\sigma_2}^P(x; \hat{\theta}_{\sigma_{12}})$ – – – – $\rightarrow$

70M2

$x \Rightarrow$ Use $\sigma_n$ to train a model $\Rightarrow \hat{\theta}_{\sigma_n} \Rightarrow f_{\sigma_n}^P(x; \hat{\theta}_{\sigma_n})$ – – – – $\rightarrow$

$\sigma$

70Mn

4.
Repeat previous steps

FIG. 7

1.
Train a model

2.
Evaluate result of each parameter

3.
Choose the best hyperparameter $\sigma$

$x, \sigma \Rightarrow$ Incorporate a hypernetwork into model training $\Rightarrow$
$f^H(\sigma; \omega)$

$\sigma_1 \Rightarrow \hat{\theta}_{\sigma_1}$

$\sigma_2 \Rightarrow \hat{\theta}_{\sigma_2}$

$\vdots$

$\sigma_n \Rightarrow \hat{\theta}_{\sigma_n}$

$f^P_{\sigma_k}(x; \hat{\theta}_{\sigma_k}) \dashrightarrow$ 80M $\dashrightarrow$

AUROC

$\sigma$

4.
Repeat previous steps

FIG. 8

FIG. 9

(a) 11IN

(b) 11UT1

(c) 11UT2

FIG. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/383224 A1 (CHEN CHIH-YANG [TW] ET AL) 9 December 2021 (2021-12-09) * paragraph [0001] - paragraph [0077]; figures 1-9 * ----- | 1-3,6-15 | INV. G06N3/0985 G06N3/0464 G06N3/0499 G06N3/084 G06N3/09 |
| X | CHIH-YANG CHEN ET AL: "Hypernetwork-Based Augmentation", ARXIV.ORG, CORNELL UNIVERSITY LIBRARY, 201 OLIN LIBRARY CORNELL UNIVERSITY ITHACA, NY 14853, 7 October 2021 (2021-10-07), XP091064460, * page 1 - page 5 * * figures 1-3 * * Algorithm 1 * ----- | 1,4,5,14 | |
| A | SOPER DANIEL S.: "Hyperparameter Optimization Using Successive Halving with Greedy Cross Validation", ALGORITHMS, vol. 16, no. 1, 27 December 2022 (2022-12-27), page 17, XP093260800, ISSN: 1999-4893, DOI: 10.3390/a16010017 * abstract * * 1.1 * ----- | 1-15 | |
| A | JONATHAN LORRAINE ET AL: "Stochastic Hyperparameter Optimization through Hypernetworks", ARXIV.ORG, CORNELL UNIVERSITY LIBRARY, 201 OLIN LIBRARY CORNELL UNIVERSITY ITHACA, NY 14853, 26 February 2018 (2018-02-26), XP081223333, * abstract * * page 1 - page 5; figures 1,2 * ----- -/-- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 21 March 2025 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

|  | Europäisches Patentamt<br>European Patent Office<br>Office européen des brevets | **EUROPEAN SEARCH REPORT** | **Application Number**<br>EP 24 20 7748 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | JOSE JAVIER GONZALEZ ORTIZ ET AL:<br>"Amortized Learning of Dynamic Feature<br>Scaling for Image Segmentation",<br>ARXIV.ORG, CORNELL UNIVERSITY LIBRARY, 201<br>OLIN LIBRARY CORNELL UNIVERSITY ITHACA, NY<br>14853,<br>11 April 2023 (2023-04-11), XP091482432,<br>* the whole document *<br>----- | 1-15 | |
| A | VINOD KUMAR CHAUHAN ET AL: "A Brief<br>Review of Hypernetworks in Deep Learning",<br>ARXIV.ORG, CORNELL UNIVERSITY LIBRARY, 201<br>OLIN LIBRARY CORNELL UNIVERSITY ITHACA, NY<br>14853,<br>12 June 2023 (2023-06-12), XP091536509,<br>* the whole document *<br>----- | 1-15 | |
| | | | TECHNICAL FIELDS<br>SEARCHED (IPC) |

The present search report has been drawn up for all claims

| Place of search | Date of completion of the search | Examiner |
|---|---|---|
| The Hague | 21 March 2025 | Keresztury, Bence |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

          

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 24 20 7748

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | Publication date | Patent family member(s) | | Publication date |
|---|---|---|---|---|
| US 2021383224 A1 | 09-12-2021 | CN | 113762327 A | 07-12-2021 |
| | | EP | 3920102 A1 | 08-12-2021 |
| | | JP | 7226696 B2 | 21-02-2023 |
| | | JP | 2021193564 A | 23-12-2021 |
| | | KR | 20210152402 A | 15-12-2021 |
| | | TW | 202147139 A | 16-12-2021 |
| | | US | 2021383224 A1 | 09-12-2021 |

EPO FORM P0459

For more details about this annex : see Official Journal of the European Patent Office, No. 12/82

**REFERENCES CITED IN THE DESCRIPTION**

**Patent documents cited in the description**

- TW 113116850